# EUROPÄISCHE PATENTSCHRIFT

(11) **EP 2 861 661 B1**
(45) Veröffentlichungstag und Bekanntmachung des Hinweises auf die Patenterteilung: **20.04.2016**
(21) Anmeldenummer: 13725102.1
(22) Anmeldetag: 14.05.2013
(51) Int. Cl.: C08K 5/18, C08L 33/08, C08L 33/10

(54) **HÄRTUNG VON REAKTIONSHARZEN UNTER VERWENDUNG VON ASYMMETRISCHEN AMINEN ALS BESCHLEUNIGER**
CURING OF REACTION RESINS USING ASYMMETRIC AMINES AS ACCELERATORS
DURCISSEMENT DE RÉSINES RÉACTIVES PAR L'UTILISATION D'AMINES ASYMÉTRIQUES COMME ACCÉLÉRATEURS

(30) Priorität: 15.06.2012 DE 102012210121
(43) Veröffentlichungstag der Anmeldung: 22.04.2015
(73) Patentinhaber: Evonik Röhm GmbH, 64293 Darmstadt (DE)
(72) Erfinder: HILF, Stefan, 109700 Singapore (SG)
(86) Internationale Anmeldenummer: PCT/EP2013/059856
(87) Internationale Veröffentlichungsnummer: WO 2013/185993

(56) Entgegenhaltungen:
- WO-A1-2011/091908
- US-A1- 2007 080 321
- DATABASE WPI Week 198205 Thomson Scientific, London, GB; AN 1982-09116E XP002713020, & JP S56 166270 A (NIPPON SHOKUBAI KAGAKU KOGYO CO LTD) 21. Dezember 1981 (1981-12-21)

## Beschreibung

### Gebiet der Erfindung

Die vorliegende Erfindung umfasst eine neuartige Formulierung zur Markierung oder Beschichtung von Bodenflächen bzw. Fahrbahnen, wie beispielsweise Straßen, die gegenüber dem Stand der Technik über eine reduzierte Gesundheitsschädlichkeit verfügt und dabei über vergleichbare mechanische Eigenschaften verfügt. Die vorliegende Erfindung betrifft insbesondere Reaktionsharze, die asymmetrische aromatische tertiäre Amine als eine neuartige Beschleunigerkomponente enthalten.

An moderne Fahrbahnmarkierungen wird eine Reihe von Ansprüchen gestellt. Zum einen wird von solchen Systemen erwartet, dass sie eine einfache Auftragbarkeit auf der Straßenoberfläche und gleichzeitig hohe Lagerstabilität, sowie eine lange Lebensdauer der Markierung mit sich bringen. Auch von Bedeutung sind eine schnelle Verarbeitbarkeit und insbesondere eine Verarbeitbarkeit in einem möglichst breiten Temperaturfenster. Weiterhin wird verlangt, dass die verwendeten Reaktionsharze möglichst toxikologisch wenig bedenklich sind und bei deren Herstellung keine akut toxischen Rohstoffe gehandhabt werden müssen. Insbesondere sind dabei Reaktionsharze mit schneller Aushärtung bei möglichst geringem Gehalt an beschleunigenden Aminen gefordert von denen einerseits Gefahren für die Gesundheit der Verarbeiter ausgehen, andererseits aber auch unerwünschte Nebeneffekte, wie z. B. Vergilbung der Beschichtungen unter UV-Einwirkung auftreten.

### Stand der Technik

Als Fahrbahnmarkierungsmaterialien werden zurzeit Systeme wie Lösungsmittel basierte Farben, Wasserfarben, thermoplastische Farben, Farben auf Basis von Reaktionsharzen sowie vorgefertigte Klebebänder eingesetzt. Letztere haben den Nachteil, dass sie aufwendig herzustellen und zu applizieren sind. Auch gibt es in Hinblick auf eine anzustrebende Langlebigkeit der Markierung nur eingeschränkte Freiheitsgrade bezüglich der Ausgestaltung der Markierung, z.B. mit Glasperlen.

Thermoplastische Überzüge, die im geschmolzenen Zustand auf der Fahrbahnoberfläche aufgebracht werden, können an sich auch auf eine hohe Aushärtungsgeschwindigkeit optimiert werden. Ihre Verwendung hat den großen Nachteil eines zusätzlichen Verfahrensschrittes, indem das Produkt erst, z.B. bei 200 °C zum Schmelzen gebracht werden muss, bevor es appliziert werden kann. Dies ist nicht nur wegen der hohen Temperatur potentiell gefährlich, sondern thermoplastische Systeme weisen an sich eine erhöhte Abriebsneigung und eine verminderte thermische Belastbarkeit auf. Thermoplastische Systeme sind oft deutlich kurzlebiger als Systeme, die z.B. auf Reaktionsharzen basieren und unter Vernetzung reagieren.

Ein etabliertes System zur Markierung von Straßen bzw. zur Bodenbeschichtung sind so genannte Reaktionsharze. Dabei handelt es sich in der Regel um 2-K-Systeme, die Monomere, Polymere und weitere Komponenten wie z.B. Füllstoffe, Hilfsstoffe oder Glasperlen aufweisen. In der einen Komponente der 2-K-Systeme ist dabei eine Initiatorkomponente enthalten und in der zweiten Komponente ein Beschleuniger. Vor der Applikation werden diese beiden Komponenten miteinander vermischt und innerhalb einer Topfzeit auf der Straße bzw. dem Fußboden appliziert. Dabei ist eine richtige Kombination aus einem Initiator und einem dazu passenden Beschleuniger von großer Bedeutung. Bei ungeeigneten Kombinationen kommt es zu entweder zu kurzen Topfzeiten mit einer zu starken Aushärtung vor der Applikation oder zu langen Aushärtezeiten mit einer sehr späten und zumeist unvollständigen Aushärtung der Beschichtung.

Als Initiatoren werden in der Regel Peroxide, wie z.B. Dilauroyl- oder Dibenzoylperoxid, bzw. Mischungen von verschiedenen Peroxiden verwendet. Als Beschleuniger kommen zumeist symmetrische Amine wie z.B. N,N-Dimethyl-p-toluidin, N,N-bis-(2-Hydroxyethyl)-p-toluidin oder N,N-bis-(2-Hydroxypropyl)-p-toluidin. Dabei handelt es sich um so genannte aromtische, symmetrische Amine. Unter aromatisch und symmetrisch wird in diesem Zusammenhang verstanden, dass es sich um tertiäre Amine mit einem aromatischen Rest und zwei weiteren identischen Alkylresten handelt. Solche Amine sind toxikologisch bedenklich. Ein solches Reaktionsharz zur Beschichtung von Straßenoberflächen ist beispielsweise in WO 2011/091908 beschrieben.

Assymetrische, aromatische Amine, d.h. Amine mit einem aromatischen und zwei zueinander unterschiedlichen Alkylresten, sind als Beschleuniger nur in der Aushärtung von Polyesterharzen bekannt. Bei diesen handelt es sich um reine Polymersysteme, die Grundsätzlich als Beschleuniger in 2-K-Härtersystemen bekannt sind. In US 6,114,470, US 6,774,193 bzw. US 6,258,894 ist die Verwendung in Kombination mit Peroxiden zur Härtung von Systemen aus ungesättigten Polyestern und optional Styrolen oder Diallylphthalaten, zur Verwendung als Giesharz, Automobilreparaturharz oder Beschichtung von Baumaterialien wie Holz oder Beton. In EP 1 931 726 wird das Problem, dass N-methyl-N-(2-hydroxyethyl)-p-toluidin zur Kristallisation neigt, dadurch gelöst, dass das Amin mit 2 bis 50 Gew% eines (Meth)acrylesters gelagert werden, bevor sie zu einem der beschriebenen Polyestersystemen gegeben werden. Dabei polymerisieren die (Meth)acrylate zwar beim Aushärten, spielen jedoch aufgrund der geringen Konzentration keine große Rolle bezüglich der Eigenschaften des Harzes.

In keiner diesen Anwendungen wird eine Anwendung in Harzen, die auf einem MOPO-System mit hohen Anteilen (Meth)acrylatmonomeren nahegelegt. Auch ist einer Verwendung der asymmetrischen Amine in einem Reaktionsharz für Straßenmarkierungen oder Bodenbeschichtungen, enthaltend entsprechende anorganische Komponenten, beschrieben.

### Aufgabe

Aufgabe der vorliegenden Erfindung ist die Bereitstellung eines neuen Reaktionsharzes für Straßenmarkierungen oder Bodenbeschichtungen, das gegenüber dem Stand der Technik toxikologisch bei der Applikation unbedenklicher ist.

Insbesondere sind Reaktionsharze mit schneller Aushärtung bei gleichzeitig möglichst geringem Gehalt an beschleunigenden Aminen Aufgabe der vorliegenden Erfindung.

Aufgabe der vorliegenden Erfindung ist darüber hinaus die Bereitstellung eines neuen Reaktionsharzes, z.B. für Formulierungen zur Markierung von Fahrbahnoberflächen, das gegenüber dem Stand der Technik über gleichwertige mechanische Eigenschaften und über eine vergleichbare Lebensdauer verfügt. Insbesondere soll die Topfzeit, d.h. die Zeit zwischen Mischen der beiden Reaktionsharzkomponenten und dem spätesten Zeitpunkt einer möglichen Applikation zum Stand der Technik vergleichbar sein.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch ein neuartiges 2-K-Reaktionsharz, das mindestens ein asymmetrisches, tertiäres, aromatisches Amin als Beschleuniger enthält.

Insbesondere werden die Aufgaben gelöst durch ein neuartiges 2-K-Reaktionsharz auf (Meth)acrylatbasis, welches in einer oder beiden Komponenten mindestens 0,5 Gew% Vernetzer, mindestens 10 Gew% (Meth)acrylatmonomere, mindestens 3 Gew% Präpolymere und optionale weitere Zusatzstoffe enthält. Dabei enthält eine Komponente des 2-K-Reaktionsharzes - bzw. im Folgenden kurz Reaktionsharz - mindestens einen Initiator die andere Komponente mindestens ein tertiäres Amin mit einer aromatischen Gruppe und zwei sich voneinander unterscheidenden Alkylgruppen, die optional eine OH-Gruppe aufweisen können, als Beschleuniger.

Bevorzugt weist das tertiäre Amin folgende Struktur auf:

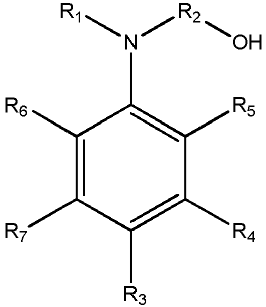

Dabei handelt es sich bei ein bis drei der Reste R₃, R₄, R₅, R₆ oder R₇ um Wasserstoff, eine Methyl- oder eine Ethylgruppe, bei den anderen Resten R₃ bis R₇ um Wasserstoff und bei R₁ und bei R₂ jeweils unabhängig voneinander um einen Alkylrest mit 1 bis 4 Kohlenstoffatomen.

Besonders bevorzugt handelt es sich bei dem asymmetrischen, tertiären aromatischen Amin um N-Methyl-N-(hydroxyethyl)-p-tuloidin, N-Methyl-N-(hydroxyethyl)-m-tuloidin, N-Methyl-N-(hydroxypropyl)-p-tuloidin, ein N-Methyl-N-(hydroxyethyl)-xylidin, ein N-Methyl-N-(hydroxypropyl)-xylidin, N-Methyl-N-(hydroxyethyl)-anilin oder N-Methyl-N-(hydroxypropyl)-anilin.

Bei den aufgeführten Xylidinen kann es sich dabei jeweils um Xylidinreste mit den zwei Methylgruppen in 2-,3-; 2-,4-; 2-,5-; 2-,7-; 3-,4- oder 3-,5-Stellung handeln.

Bevorzugt weisen die beiden Komponenten des Reaktionsharzes zusammen folgende Inhaltsstoffe auf:
0,5 Gew% bis 30 Gew%, bevorzugt 2 Gew% bis 20 Gew%, besonders bevorzugt 3 Gew% bis 15 Gew% Vernetzer, bevorzugt Di-, Tri- oder Tetra-(meth)acrylate,
10 Gew% bis 96,1 Gew%, bevorzugt 30 Gew% bis 80 Gew%, besonders bevorzugt 30 Gew% bis 40 Gew% (Meth)acrylate und optional mit (Meth)acrylaten copolymerisierbare Komponenten,
0 Gew% bis 20 Gew%, bevorzugt bis 15 Gew% Urethan(meth)acrylate,
3 Gew% bis 40 Gew%, bevorzugt 15 Gew% bis 35 Gew%, besonders bevorzugt bis 25 Gew% Präpolymere, bei denen es sich bevorzugt um Poly(meth)acrylate und/oder Polyester, besonders bevorzugt um Poly(meth)acrylate handelt,
0,1 Gew% bis 5 Gew%, bevorzugt 0,1 Gew% bis 1,0 Gew%, besonders bevorzugt 0,1 Gew% bis 0,6 Gew%, ganz besonders bevorzugt 0,3 Gew% bis 0,5 Gew% mindestens eines asymmetrischen, tertiären aromatischen Amins gemäß oben ausgeführter Beschreibung,
0 Gew% bis 25 Gew%, bevorzugt 0 Gew% bis 20 Gew%, besonders bevorzugt bis 15 Gew% Kern-Schale Partikel, bevorzugt enthaltend Polymethacrylate,
0,3 Gew% bis 5 Gew%, bevorzugt bis 3 Gew% mindestens eines Initiators, bevorzugt eines oder mehrerer Peroxide, besonders bevorzugt Dilauroylperoxid und/oder Dibenzoylperoxid, wobei der oder die Initiatoren und das tertiäre Amin in getrennten Komponenten des 2-K-Systems vorliegen, und gegebenenfalls weitere Hilfsstoffe.

Bei den weiteren Hilfsstoffen kann es sich z.B. um Stabilisatoren, Inhibitoren, Regler oder Wachse handeln. Bevorzugt ist das erfindungsgemäße Reaktionsharz halogenfrei.

Die Formulierungen Poly(meth)acrylate umfasst sowohl Polymethacrylate wie auch Polyacrylate sowie Copolymere oder Mischungen aus beiden. Die Formulierung (Meth)acrylate umfasst entsprechend Methacrylate, Acrylate oder Mischungen aus beiden. Die Formulierung (Meth)acrylate umfasst insbesondere auch Ester der (Meth)acrylsäure mit einem Acetal, Ketal oder Carbonat von Glycerin, substituiertem Glycerin oder Trimethylolpropan bzw. substituierten Trimethylolpropan, d. h. um Monomere der allgemeinen Strukturformeln (1) oder (2): 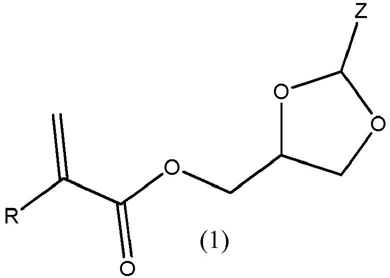 R=H, Me
R₂=H, Et
Z=H, (=O), Alkyl, Benzyl, Aryl, O-Alkyl

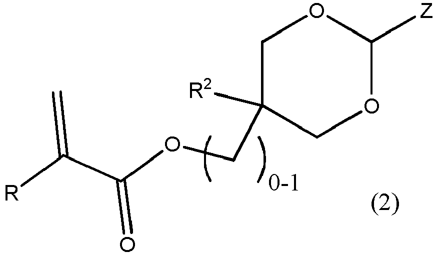

Bevorzugte Beispiele für solche Monomere sind Glycerinformal(meth)acrylat, Trimethylolpropan-formal-(meth)acrylat oder Isopropylidenglycerin(meth)acrylat (Solketal-methacrylat).

Zusätzlich kann das erfindungsgemäße Reaktionsharz weitere Beschleuniger, zum Beispiel in Form von symmetrischen tertiären, aromatischen Aminen, wie sie aus dem Stand der Technik bekannt sind enthalten. In einer solchen Ausführungsform der Erfindung bewirkt die Zugabe der erfindungsgemäß zugesetzten asymmetrischen, tertiären aromatischen Amine eine zusätzliche Beschleunigung des Reaktionsharzes und gegenüber dem Stand der Technik verkürzte Aushärtezeit.

Als besagte symmetrische tertiäre, aromatische Amine seien zum Beispiel N,N-Dimethyl-p-toluidin, N,N-bis-(2-Hydroxyethyl)-p-toluidin oder N,N-bis-(2-Hydroxypropyl)-p-toluidin genannt.

Bevorzugt sind jedoch Ausführungsformen, in denen ausschließlich asymmetrische, tertiäre aromatische Amine als Beschleuniger verwendet werden. Überraschend wurde gefunden, dass Reaktionsharze mit einem zum Stand der Technik deutlich verringerten Amingehalt mit vergleichbarer Geschwindigkeit zu etablierten Systemen ausgehärtet werden können. Damit ist die Formulierung insgesamt aus toxikologischer Sicht deutlich unkritischer als Systeme des Standes der Technik. Hinzu kommt, dass die erfindungsgemäß zugesetzten asymmetrischen Beschleuniger an sich schon weniger bedenklich sind, als die insbesondere verwendeten symmetrischen Toluidine.

Neben den beschriebenen Reaktionsharzen sind insbesondere auch mit diesen Reaktionsharzen hergestellte Kaltplastiken teil der vorliegenden Erfindung. Diese Kaltplastiken weiden dabei folgende Komponenten auf:
5 Gew% bis 60 Gew% der beiden Komponenten des 2-K-Reaktionsharzes gemäß vorangegangener Beschreibung,
0,15 Gew% bis 25 Gew%, bevorzugt 7 bis 15 Gew% eines anorganischen Pigments, bevorzugt Titandioxid,
0 Gew% bis 5 Gew% Stabilisatoren und/oder Additive und
50 Gew% bis 60 Gew% mineralische und/oder polymere Füllstoffe.

Die Komponenten der Kaltplastik werden bei der Verwendung zur Markierung von Fahrbahnoberflächen vor oder während dem Auftragen auf der Fahrbahnoberfläche gemischt. Bei anderen Verwendungen erfolgt das Mischen der Komponenten entsprechend kurz vor oder während des Gießens, Beschichtens oder Füllens, je nach Verwendung.

Unter dem Begriff Überrollbarkeit bzw. dem synonym verwendeten Begriff Wiederbefahrbarkeit wird eine Belastung der Fahrbahnmarkierung, z.B. in Form des Überrollens durch Fahrzeuge, verstanden. Die Zeitspanne bis zur Erreichung einer Überrollbarkeit ist die Zeitspanne zwischen dem Auftragen der Fahrbahnmarkierung bis zu dem Zeitpunkt, an dem keine Veränderungen in Form eines Abriebs, eines Haftungsverlusts zur Fahrbahnoberfläche bzw. zu den eingebetteten Glaskugeln oder einer Verformung der Markierung mehr festgestellt werden kann. Die Messung der Form- und Haftungsstabilität erfolgt gemäß DIN EN 1542 99 in Einklang mit DAfStb-RiLi 01.

Die erfindungsgemäßen Reaktionsharze können optional Kern-Schale Partikel als Schlagzähmodifizierungsmittel enthalten. Die Zugabe solcher Partikel in ein Reaktionsharz kann in der internationalen Anmeldung WO 2011/072846, bzw. in der deutschen Patentanmeldung 102011003317.3 nachgelesen werden. Die Kern-Schale Partikel führen zu einer höheren mechanischen Belastbarkeit und darüber hinaus zu einer Verminderung der Rissfortpflanzung und einer höheren Verträglichkeit punktueller Belastung.

Die Kern-Schale Partikel müssen gut dispergiert in der Monomer-Polymer Mischung des Reaktionsharzes vorliegen um keine Trübungen oder Klumpenbildung zu verursachen. Dies kann durch entsprechendes Rühren oder mittels einer anderen bekannten Dispergiertechnik einfach sichergestellt werden.

### Detaillierte Beschreibung der Komponenten der Kaltplastik bzw. des Reaktionsharzes

Zusätzlich kann die Kaltplastik oder Kaltspritzplastik weitere Hilfsstoffe wie Netz- und/oder Dispergiermittel, einen griffigen (rutschfesten) Füllstoff und Antiabsetzmittel enthalten. Auch können die Glaskugeln, die zur Verbesserung der Reflexion zugesetzt werden, bereits in dieser Komponente der Kaltplastik enthalten sein. Alternativ können diese auch Bestandteil der zweiten Komponente sein und bevorzugt, je nach Auftragungsmechanismus der Fahrbahnmarkierung, werden die Glaskugeln als dritte Komponente aufgetragen. Bei diesem Vorgehen, zum Beispiel angewendet mit modernen Markierungsfahrzeugen mit einer zweiten Düse, werden die Kugeln direkt nach dem Auftrag der ersten beiden Komponenten auf diese aufgespritzt. Vorteil bei diesem Vorgehen ist, dass nur der Teil der Glaskugeln, der in die Markierungsmatrix eingebettet ist, mit den Bestandteilen der anderen beiden Komponenten benetzt ist und man erhält optimale Reflexionseigenschaften. Ganz besonders bei Anwendung dieser Technologie ist jedoch eine besonders gute Einbettung der Glasperlen und eine entsprechend gute Haftung der Markierungsmatrix, bzw. der Fahrbahnmarkierungsformulierung an der Oberfläche der Glaskugeln wichtig. Überraschend wurde gefunden, dass das erfindungsgemäße Reaktionsharz, bzw. die Kaltspritzplastik, dieses Reaktionsharz enthaltend, diese geforderten Eigenschaften mindestens auf dem Niveau des Standes der Technik erfüllt. Genaue geregelt sind die geforderten Eigenschaften an eine Straßenmarkierung in DIN EN 1436.

Um die geforderten Eigenschaften weiter zu verbessern, können die Glaskugeln mit Haftvermittlern zusammen aufgetragen oder mit diesen vorher behandelt werden. Somit sind die Retrorefelektionseigenschaften und die Tages- bzw. Nachtsichtbarkeit der erfindungsgemäßen Kaltplastik mit dem Stand der Technik zumindest vergleichbar. Entsprechendes gilt für die Langlebigkeit, insbesondere der Einbettung der Glasperlen.

Als Initiatoren dienen insbesondere Peroxide oder Azoverbindungen. Unter Umständen kann es vorteilhaft sein, ein Gemisch verschiedener Initiatoren einzusetzen. Vorzugsweise finden halogenfreie Peroxide als Radikalinitiator Verwendung. Für Reaktionsharze zur Anwendung zum Beispiel für Fahrbahnmarkierungen sind besonders bevorzugt Dilauroylperoxid oder Dibenzoylperoxid. In der Regel ist das Peroxid in der zweiten Komponente mit einem Verdünnungsmittel, beispielsweise mit einem Phthalat wie Dibutylphthalat, einem Öl oder einem anderen Weichmacher versetzt. Die zuvor angegebenen Konzentrationen in der erfindungsgemäßen Reaktionsharzen beziehen sich jedoch nur auf den reinen Initiator.

In einer Alternativen Ausführungsform eines alternativen 2K- bzw. 3-K-Systems, ist der Beschleuniger in der zweiten Komponente, zum Beispiel in einem Verdünnungsmittel enthalten und der Initiator, z.B. das Peroxid ist Bestandteil des erfindungsgemäßen Reaktionsharzes. Bei der optionalen dritten Komponente handelt es sich wieder um die Glaskugeln und eventuell benötigte Haftvermittler.

Ein entscheidender Bestandteil des erfindungsgemäßen Reaktionsharzes sind die Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Poly(urethan)(meth)acrylate Tetraethylenglycol-di(meth)acrylat, Triethylenglycoldi(meth)acrylat oder Trimethylolpropantri(meth)acrylat. Der Vernetzeranteil ist gegenüber dem Stand der Technik deutlich erhöht und liegt zwischen 13 Gew% und 35 Gew%, bevorzugt zwischen minimal 20 Gew% und maximal 30 Gew%. Überraschend wurde gefunden, dass dieser relativ hohe Anteil an Vernetzer nicht nur eine hohe Anfangshärtung mit sich bringt, sondern auch in Kombination mit den anderen Komponenten eine schnelle Überrollbarkeit der Fahrbahnmarkierung, das erfindungsgemäße Harz enthaltend, ermöglicht.

Unter den optional enthaltenen Urethan(meth)acrylaten versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen (Meth)acrylaten ist EBECRYL 210-5129 der Fa. UCB Chemicals. Urethan(meth)acrylate erhöhen in einem Reaktionsharz, ohne größere Temperaturabhängigkeit, die Flexibilität, die Reißfestigkeit und die Reißdehnung. Dies hat, wie überraschend gefunden wurde, auf die Fahrbahnmarkierung in zweierlei Hinsicht einen Einfluss: Die Temperaturstabilität der Markierung nimmt zu und, besonders überraschend, können die Nachteile eines, bedingt durch den höheren Vernetzergehalt, höheren Vernetzungsgrades bezüglich Versprödung und Haftung gegenüber der Fahrbahnoberfläche ausgeglichen werden oder sogar gegenüber Kaltplastiken gemäß dem Stand der Technik verbessert werden. Dazu ist eine für Fahrbahnmarkierungen relativ hohe Konzentration der Urethan(meth)acrylate in dem Reaktionsharz nötig. Das erfindungsgemäße Reaktionsharz enthält zwischen 5 Gew% und 30 Gew%, bevorzugt zwischen 10 Gew% und 20 Gew% der beschriebenen Urethan(meth)acrylate.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen.

Als Bestandteile von Monomergemischen eignen sich auch zusätzliche Monomere mit einer weiteren funktionellen Gruppe, wie a,β-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole. Im Einzelnen wird das Poly(meth)acrylat nach Anteil und Zusammensetzung zweckmäßigerweise im Hinblick auf die gewünschte technische Funktion gewählt werden.
Der Monomeranteil des Reaktionsharzes liegt dabei zwischen 20 Gew% und 85 Gew%, bevorzugt zwischen 30 Gew% und 40 Gew%.

In sogenannten MO-PO-Systemen liegen neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate vor. Diese werden zur Verbesserung der Polymerisationseigenschaften, der mechanischen Eigenschaften, der Haftung zum Untergrund sowie der optischen Anforderungen an die Harze eingesetzt. Der Präpolymeranteil des Reaktionsharzes liegt dabei zwischen 10 Gew% und 30 Gew%, bevorzugt zwischen 15 Gew% und 25 Gew%. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt, in Hinblick auf eine bessere Farbstabilität der Fahrbahnmarkierung, weisen die Präpolymere jedoch keine Doppelbindungen auf.
Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.
Besagte Polyester werden in Substanz via Polykondensation oder ringöffnende Polymerisation gewonnen und setzen sich aus den für diese Anwendungen bekannten Bausteinen zusammen.

Als Hilfs- und Zusatzstoffe können zusätzlich Regler, Weichmacher, Paraffine, Stabilisatoren, Inhibitoren, Wachse und/oder Öle eingesetzt werden.
Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als Regler können alle aus der radikalischen Polymerisation bekannten Verbindungen verwendet werden. Bevorzugt werden Mercaptane wie n-Dodecylmercaptan eingesetzt.
Als Weichmacher werden vorzugsweise Ester, Polyole, Öle, niedermolekulare Polyether oder Phthalate eingesetzt.

Zusätzlich können den Formulierungen zur Fahrbahnmarkierungen Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden.
Für das Einsatzgebiet der Formulierungen als Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 50 µm bis 800 µm. Die Glasperlen können zur besseren Verarbeitung und Haftung mit einem Haftvermittler versehen werden. Bevorzugt können die Glasperlen silanisiert werden.

Zudem können der Formulierung ein oder mehrere mineralische Feinfüllstoffe und Grobfüllstoffe zugesetzt werden. Diese Materialien dienen auch als Rutschhemmer und werden daher insbesondere zur Griffverbesserung und zur zusätzlichen Färbung der Fahrbahnmarkierung eingesetzt. Feinfüllstoffe werden aus der Gruppe der Calciumcarbonate, Bariumsulfate, Quarze, Quarzmehle, gefällten und pyrogenen Kieselsäuren, Pigmente und Cristobalite sowie Korund eingesetzt. Als Grobfüllstoffe werden Quarze, Cristobalite, Korunde und Aluminiumsilikate eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Folgende Komponenten können optional auch in Formulierungen zur Fahrbahnmarkierung enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Die erfindungsgemäßen Raktionsharze ermöglichen derart hohe Formulierungsfreiheiten, dass die erfindungsgemäßen Reaktionsharze bzw. die erfindungsgemäßen Kaltplastiken/Kaltspritzplastiken, das Reaktionsharz enthaltend, genauso formulierbar und additivierbar sind, wie eine etablierte Kaltplastik/Kaltspritzplastik des Standes der Technik. Somit sind auch die Abriebfestigkeit, die Langlebigkeit, der Weißgrad, die Pigmentierung und die Griffigkeit mindestens so gut wie bei Systemen des Standes der Technik.

Zumindest die Vergleichbarkeit mit dem Stand der Technik gilt entsprechend auch bezüglich der Lagerstabilität des Reaktionsharzes.
Auch kann das System bezüglich des zu beschichtenden Untergrunds, mittels Wahl geeigneter Monomere, Präpolymere und/oder Haftvermittler, optimiert werden. Die erfindungsgemäßen Systeme sind entsprechend variabel optimierbar für die Markierung von Asphalt-, Beton- oder Natursteinoberflächen.

### Verwendung der Reaktionsharze bzw. Kaltplastiken/ Kaltspritzplastiken

Bevorzugt werden die erfindungsgemäßen Reaktionsharze, bzw. Kaltplastiken, diese Reaktionsharze enthaltend, zur Straßenmarkierung, insbesondere zur Herstellung von langlebigen Fahrbahnmarkierungen, oder zur Beschichtung von Fußböden, insbesondere im industriellen oder gewerblichen Bereich, eingesetzt. Diese Auflistung ist jedoch nicht dazu geeignet, die Anwendung der erfindungsgemäßen Reaktionsharze bzw. Kaltplastiken in irgendeiner Form einzuschränken.

Auch bezüglich der Applikationstechnologie sind die erfindungsgemäßen Systeme flexibel einsetzbar. Die erfindungsgemäßen Reaktionsharze, bzw. Kaltplastiken können z.B. sowohl im Sprüh-, im Gieß- als auch im Extrusionsverfahren bzw. manuell mittels einer Kelle, einer Rolle oder einem Rakel aufgetragen werden.

Die einzelnen Komponenten der Kaltplastik wie z.B. das erfindungsgemäße Reaktionsharz können vor, nach oder während der Weiterverarbeitung, wie z.B. dem Auftragen auf einer Fahrbahnoberfläche, gemischt werden. Etabliert ist ein Einmischen vor der Weiterverarbeitung, wobei darauf zu achten ist, dass nach dem Einmischen der Härterkomponente eine nur limitierte offene Zeit, z.B. von 2 oder 40 min, zum Applizieren verbleibt.
Ein Mischen während des Verarbeitens ist zum Beispiel in modernen Markierungsmaschinen, die über eine der Auftragsdüse vorgeschaltete Mischkammer verfügen, möglich. Ein Einmischen des Härters nach dem Auftragen kann z.B. durch ein nachfolgendes Auftragen mit zwei oder mehr Düsen erfolgen oder durch auftragen von Glaskugeln, welche mit Härter beschichtet sind. Alternativ kann eine Grundierung enthaltend die Härterkomponente vorgesprüht werden bevor die Kaltplastik oder Kaltspritzplastik aufgetragen wird.

Darüber hinaus sind die mechanischen Eigenschaften der mit den erfindungsgemäßen Reaktionsharzen hergestellten Fahrbahnmarkierung in einem typischen Bereich zwischen 200 µm und 7000 µm, unabhängig von der Auftragsdicke, ausgezeichnet. Die Auftragsdicke der erfindungsgemäßen Kaltplastik bzw. Kaltspritzplastik liegt bevorzugt zwischen 400 µm und 1000 µm und besonders bevorzugt zwischen 600 µm und 800 µm. Dünnere und dickere Schichten sind ja nach Anwendung möglich.

Bevorzugt werden die erfindungsgemäßen Reaktionsharze bzw. die daraus hergestellten Kaltplastiken zur Herstellung von langlebigen Fahrbahnmarkierungen verwendet.

Insbesondere werden die Reaktionsharze bzw. Kaltplastiken in einem Verfahren angewandt, bei dem vor, während oder direkt nach der Aufbringung der Kaltplastik auf einer Fahrbahnoberfläche Glaskugeln zugegeben werden.

Alternativ können die erfindungsgemäßen Reaktionsharze und/oder Kaltplastiken auch in anderen technischen Gebieten Anwendung finden. Beispiele dafür sind Fußbodenbeläge, bevorzugt für industrielle Anwendungen, zur Herstellung von Gussteilen, zur Abdichtung oder Beschichtung von Dächern, Brücken oder deren Fugen, insbesondere als Dampfsperrmembran, zur Brückenbeschichtung allgemein, als Dampfsperrmembran auf Dächern, zur Herstellung von Platten, z.B. zur Weiterverwendung als Arbeitsplatte, zur Herstellung von Schutzbeschichtungen insbesondere für Metalloberflächen, als Kanalharz, zur Rissverfüllung z.B. in Gebäuden, oder zur Verwendung im Bereich der Orthopädie.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Verwendete Materialien:

Als Polymerkomponenten wurden Degalan LP 64/12 und Degalan LP 66/02 (beide Fa. Evonik Röhm) verwendet. Hierbei handelt es sich um Suspensionspolymerisate die Methylmethacrylat und n-Butylmethacrylat in verschiedenen Verhältnissen enthalten und Molmassen zwischen 30000 und 90000 g/mol (Mw) aufweisen (ermittelt durch SEC gegen PMMA Standards). Als Beschleuniger wurden NN-Diethanol-p-toluidin (DEPT) und erfindungsgemäß N-Methyl-N-hydroxyethyl-p-toluidin (MHPT) verwendet.

Zur Ermittlung der Topfzeit wurde diejenige Zeit ermittelt, die das Material nach Einrühren des Härters benötigt um sich selbst von Raumtemperatur (20 - 22 °C) auf 32 °C zu erwärmen.

Zur Ermittlung der t-max wurde diejenige Zeit verwendet, die 20g Harz in einem PE-Becher mit 45mm Durchmesser benötigen um das Temperaturmaximum (Tmax) während der Aushärtung zu erreichen.

### Vorstufe 1

Zu 39 Gewichtsteilen Glycerinformalmethacrylat, 34 Teilen 2-Ethylhexylacrylat, 5 Teilen 2-Hydroxyethylmethacrylat und 1 Gewichtsteilen Triethylenglycoldimethacrylat werden 0,06 Gewichtsteile Topanol-O (Antioxidants, 2,6-di-tert-Butyl-4-methylphenol), 0,2 Gewichtsteile Tridecylphosphit, 17 Gewichtsteile Degalan LP 66/02, 3 Gewichtsteile Degalan LP 64/12 und 1,4 Gewichtsteile Sasolwax 5603 (ein Olefinwachs) gegeben und unter starkem Rühren bei 63°C so lange gemischt, bis alle Bestandteile gelöst sind. Das Harz wird anschließend unter Rühren auf 23°C abgekühlt.

Allgemeine Vorschrift für die Durchführung der Beispiele (B1 bis 7) bzw. Vergleichsbeispiele (VB1 bis 4):
Zu 100 Gewichtsteilen der Vorstufe 1 werden die in Tabelle 1 angegebenen Mengen der Beschleuniger unter Rühren gelöst. Zur Aushärtung wird dem erhaltenen Harz 2 Gewichtsprozent Härterpulver (50% BPO in Dicyclohexylphthalat) beigemischt, für eine Minute gerührt und dann in ca. 2 mm Schichtdicke auf eine Metalloberfläche aufgetragen bzw. in die o.g. Prüfbecher gegossen.

**Tabelle 1**

| Beispiel | DEPT | MHPT | Topf | | Tmax | | O-Test |
|---|---|---|---|---|---|---|---|
| | GT | GT | % | min | min | °C | min |
| VB1 | 0,10 | | 0,10 | x | x | x | x |
| VB2 | 0,20 | | 0,20 | 34,4 | 41,6 | 112,0 | 120 |
| VB3 | 0,50 | | 0,50 | 13, 6 | 16,5 | 98,9 | 38 |
| VB4 | 1,00 | | 1,00 | 7,4 | 9,5 | 112,1 | 26 |
| B1 | | 0,10 | 0,10 | 16,5 | 21,9 | 119,5 | 120 |
| B2 | | 0,20 | 0,20 | 8,5 | 11,9 | 127,7 | 120 |
| B3 | | 0,50 | 0,50 | 4,5 | 7,0 | 124,1 | 20 |
| B4 | | 1,00 | 1,00 | 3,4 | 5,1 | 102,6 | 16 |
| B5 | 0,25 | 0,75 | 1,00 | 4,1 | 5,9 | 106,2 | 10 |
| B6 | 0,50 | 0,50 | 1,00 | 5,0 | 6,8 | 106,9 | 13 |
| B7 | 0,75 | 0,25 | 1,00 | 5,5 | 7,2 | 107,0 | 13 |

| | | | | | | | |
|---|---|---|---|---|---|---|---|
| GT = Gewichtsteile | | | | | | | |

Die Zeit bis zum Bestehen des Oberflächentestes (O-Test) wird als diejenige Zeit bestimmt, ab der die Oberfläche der in 2mm ausgegossenen Harzschicht klebfrei ausgehärtet ist. Der Vergleich zwischen VB1 und B1 zeigt, dass auch mit kleinen Mengen der erfindungsgemäß verwendeten Beschleuniger bereits Zusammensetzungen ausgehärtet werden können, die nach Stand der Technik zu keinem sinnvollen Ergebnis führen. Der Vergleich der Beispiele B3 und B4 zu den Vergleichbeispielen VB3 und VB4 zeigt wiederum, dass mit gleichen Mengen deutlich schneller vollständig ausgehärtet wird. Der Vergleich von B2 und VB2, jeweils mit einer recht langen O-Test-Zeit zeigt, dass bei geringen Konzentrationen des Beschleunigers die Reaktion zumindest schneller einsetzt (Topfzeit) und dabei die Gesamtaushärtung nicht länger dauert (O-Test).
Beispiele B5 bis B7 zeigen darüber hinaus, dass bereits durch einen nur teilweisen Austausch der Beschleuniger eine Beschleunigung der Aushärtung erreicht werden kann. Dies bedeutet im Umkehrschluss, dass bei identisch eingestellter Aushärtezeit (O-Test) mit geringeren Konzentrationen Beschleuniger gearbeitet werden kann.

In einer zweiten Versuchsreihe wurde von einer etablierten, im Markt erhältlichen Komponente einer 2K-Straßenmarkierung ausgegangen und diese mit unterschiedlichen Beschleunigern versetzt. Es handelt sich bei dieser Komponente um DEGAROUTE^{®} 469 der Fa. Evonik Industries AG. Dieses Reaktionsharz enthält u.a. (Meth)acrylatmonomere und Präpolymere. Dabei ist diese Komponente des Reaktionsharzes jedoch frei von Aminen, die in Form einer zweiten Komponente bei der Anwendung zugegeben werden. Es wurden unterschiedliche Amine in unterschiedlichen Mengen zugesetzt (Mengen und Ergebnisse siehe Tabelle 2).
Die Aushärtung erfolgte durch anschließende Zugabe von 2 Gew% BPO-Pulver (Benzoylperoxid; Handelsprodukt Härterpulver der Evonik Industries AG) in einer Schichtdicke von 3 mm bei Raumtemperatur.
Die Shore-A-Härte wurde 5 Tage nach der Aushärtung bei Raumtemperatur in Anlehnung an DIN 53505 auf der Probenunterseite gemessen. Hohe Shore-A-Härtewerte bedeuten eine optimale Polymerisation.

**Tabelle 2**

| Beispiel | Amin | Topfzeit [32°C] | Tmax [°C] | Tmax [min] | O-TEST [min] | Shore-A-Härte |
|---|---|---|---|---|---|---|
| B8 | 0,3% MHPT | 10 | 159 | 17 | 29 | 63 |
| VB5 | 0,3% DEPT | 19 | 172 | 29 | 45 | 64 |
| VB6 | 0,3% DIPT | 16 | 170 | 26 | 39 | 71 |
| VB7 | 0,3% DMPT | 16 | 128 | 30 | >85 Oberfläche bleibt klebrig | 41 |
| B9 | 0,6% MHPT | 5 | 124 | 13 | 22 | 44 |
| VB8 | 0,6% DEPT | 13 | 146 | 18 | 28 | 66 |
| VB9 | 0,6% DIPT | 11 | 146 | 17 | 23 | 61 |
| VB10 | 0,6% DMPT | 8 | 96 | 18 | 38 | 36 |
| B10 | 1,0% MHPT | 6 | 77 | 9 | 15 | 20 |
| VB11 | 1,0% DEPT | 9 | 83 | 14 | 21 | 26 |
| VB12 | 1,0% DIPT | 8 | 120 | 13 | 21 | 38 |
| VB13 | 1,0% DMPT | 7 | 106 | 13 | 32 leicht klebrig | 21 |

| | | | | | | |
|---|---|---|---|---|---|---|
| MHPT: N-(2-Hydroxyethyl)-N-methyl-p-toluidin; DEPT: N,N-bis-(2-Hydroxyethyl)-p-toluidin; DIPT: N.N-bis-(2-Hydroxypropyl)-p-toluidin; DMPT: Di-methyl-p-toluidin | | | | | | |

Die schnelle Aushärtung der Harze lässt sich anhand dem gegenüber dem Stand der Technik schnelleren Erreichen der Maximaltemperatur Tₘₐₓ erkennen. Eine hohe, mit dem Stand der Technik vergleichbare Shore-A-Härte ist mit dem erfindungsgemäßen Amin (MHPT) schon bei sehr geringer Zugabe (0,3 Gew%; siehe Beispiel B8) nach kurzer Zeit (siehe O-Test: 29 min) der Fall. Bei derart geringer Zugabe dauert es mit den herkömmlichen (symmetrischen) Aminen DEPT bzw. DIPT wesentlich länger bis eine vollständige Aushärtung erreicht wird, bzw. es ist im Falle von DMPT überhaupt nicht möglich eine vollständige Aushärtung zu erzielen.

## Patentansprüche

1. 2-K-Reaktionsharz auf (Meth)acrylatbasis, welches in einer oder beiden Komponenten mindestens 0,5 Gew% Vernetzer, mindestens 10 Gew% (Meth)acrylatmonomere, mindestens 3 Gew% Präpolymere und optionale weitere Zusatzstoffe enthalten, **dadurch gekennzeichnet, dass** eine Komponente mindestens einen Initiator enthält, und dass die andere Komponente mindestens ein tertiäres Amin mit einer aromatischen Gruppe und zwei sich voneinander unterscheidenden Alkylgruppen, die optional eine OH-Gruppe aufweisen können, als Beschleuniger enthält.

2. 2-K-Reaktionsharz gemäß Anspruch 1, **dadurch gekennzeichnet, dass** das tertiäre Amin folgende Struktur aufweist: 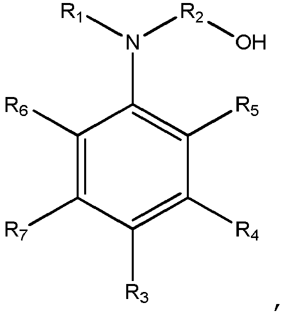 wobei es sich bei ein bis drei der Reste R₃, R₄, R₅, R₆ oder R₇ um Wasserstoff, eine Methyl- oder eine Ethylgruppe, bei den anderen Resten R₃ bis R₇ um Wasserstoff und bei R₁ und bei R₂ jeweils unabhängig voneinander um einen Alkylrest mit 1 bis 4 Kohlenstoffatomen handelt.

3. Reaktionsharz gemäß Anspruch 1, **dadurch gekennzeichnet, dass** es sich bei dem tertiären Amin um N-Methyl-N-(hydroxyethyl)-p-tuloidin, N-Methyl-N-(hydroxyethyl)-m-tuloidin, N-Methyl-N-(hydroxypropyl)-p-tuloidin, ein N-Methyl-N-(hydroxyethyl)-xylidin, ein N-Methyl-N-(hydroxypropyl)-xylidin, N-Methyl-N-(hydroxyethyl)-anilin oder N-Methyl-N-(hydroxypropyl)-anilin handelt.

4. Reaktionsharz gemäß einem der Ansprüche 1 bis 3, **dadurch gekennzeichnet, dass** die beiden Komponenten des Reaktionsharzes zusammen folgende Inhaltsstoffe aufweisen:
0,5 Gew% bis 30 Gew% Vernetzer,
10 Gew% bis 96,1 Gew% (Meth)acrylate und optional mit (Meth)acrylaten copolymerisierbare Komponenten,
0 Gew% bis 20 Gew% Urethan(meth)acrylate,
3 Gew% bis 40 Gew% Präpolymere,
0,1 Gew% bis 5 Gew% mindestens einen tertiären Amins gemäß Anspruch 1,
0 Gew% bis 25 Gew% Kern-Schale Partikel,
0,3 Gew% bis 5 Gew% mindestens eines Initiators, wobei der oder die Initiatoren und das tertiäre Amin in getrennten Komponenten des 2-K-Systems vorliegen, und
gegebenenfalls weitere Hilfsstoffe.

5. Reaktionsharz gemäß Anspruch 4, **dadurch gekennzeichnet, dass** die beiden Komponenten des Reaktionsharzes zusammen folgende Inhaltsstoffe aufweisen:
2 Gew% bis 20 Gew% Di-, Tri- oder Tetra-(meth)acrylate,
30 Gew% bis 80 Gew% (Meth)acrylate und optional mit (Meth)acrylaten copolymerisierbare Komponenten,
0 Gew% bis 20 Gew% Urethan(meth)acrylate,
15 Gew% bis 35 Gew% Poly(meth)acrylate und/oder Polyester,
0,1 Gew% bis 1,0 Gew% mindestens einen tertiären Amins gemäß Anspruch 1,
0 Gew% bis 20 Gew% Kern-Schale Partikel,
0,3 Gew% bis 3 Gew% Initiator, wobei der Initiator und das tertiäre Amin in getrennten Komponenten des 2-K-Systems vorliegen, und
gegebenenfalls weitere Hilfsstoffe.

6. Reaktionsharz gemäß Anspruch 4 oder 5, **dadurch gekennzeichnet, dass** das Reaktionsharz halogenfrei ist, und dass das Reaktionsharz folgende Inhaltsstoffe aufweist:
3 Gew% bis 15 Gew% Dimethacrylate,
30 Gew% bis 40 Gew% (Meth)acrylate und optional mit (Meth)acrylaten copolymerisierbare Komponenten,
0 Gew% bis 20 Gew% Urethan(meth)acrylate,
15 Gew% bis 25 Gew% Poly(meth)acrylate,
0,1 Gew% bis 5 Gew% tertiäre Amine gemäß Anspruch 2,
0 Gew% bis 15 Gew% Kern-Schale Partikel enthaltend Polymethacrylate,
0,3 Gew% bis 5 Gew% eines oder mehrerer Peroxide und gegebenenfalls weitere Hilfsstoffe.

7. Reaktionsharz gemäß Anspruch 1 bis 6, **dadurch gekennzeichnet, dass** dieses 0,1 Gew% bis 0,5 Gew% des tertiäre Amine gemäß Anspruch 1 oder 2 enthält.

8. Reaktionsharz gemäß einem der Ansprüche 1 bis 7, **dadurch gekennzeichnet, dass** es sich bei dem Peroxid um Dilauroylperoxid und/oder Dibenzoylperoxid handelt.

9. Kaltplastik, **dadurch gekennzeichnet,**
**dass** die Kaltplastik folgende Komponenten aufweist:
5 Gew% bis 60 Gew% der beiden Komponenten des 2-K-Reaktionsharzes gemäß einem der Ansprüche 1 bis 8,
0,15 Gew% bis 25 Gew% eines anorganischen Pigments, bevorzugt Titandioxid, 0 Gew% bis 5 Gew% Stabilisatoren und/oder Additive und
50 Gew% bis 60 Gew% mineralische und/oder polymere Füllstoffe.

10. Verwendung eines Reaktionsharzes gemäß mindestens einem der Ansprüche 1 bis 8 zur Herstellung von Fahrbahnmarkierungen.

11. Verwendung eines Reaktionsharzes gemäß mindestens einem der Ansprüche 1 bis 8 in Fußbodenbeläge, zur Herstellung von Gussteilen, zur Abdichtung oder Beschichtung von Brücken oder Dächern, zur Herstellung von Platten, zur Herstellung von Schutzbeschichtungen insbesondere für Metalloberflächen, in Kanalharzen oder zur Verwendung im Bereich der Orthopädie.

12. Verwendung einer Kaltplastik gemäß Anspruch 9 zur Herstellung von langlebigen Fahrbahnmarkierungen.

13. Verwendung einer Kaltplastik gemäß Anspruch 9 zur Herstellung von langlebigen Fahrbahnmarkierungen, **dadurch gekennzeichnet, dass** vor, während oder direkt nach der Aufbringung der Kaltplastik auf der Fahrbahnoberfläche Glaskugeln zugegeben werden.

## Claims

1. (Meth)acrylate-based 2-component reactive resin which comprises, in one or both components, at least 0.5% by weight of crosslinking agent, at least 10% by weight of (meth)acrylate monomers, at least 3% by weight of prepolymers and optional other additional substances, **characterized in that** one component comprises at least one initiator, and that the other component comprises, as accelerator, at least one tertiary amine having an aromatic group and two alkyl groups differing from one another which can optionally have an OH group.

2. Two-component reactive resin according to Claim 1, **characterized in that** the tertiary amine has the following structure: 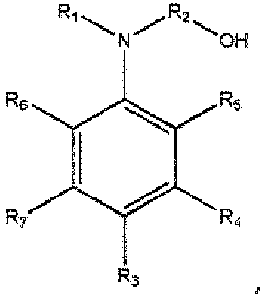 where from one to three of the moieties R₃, R₄, R₅, R₆ and R₇ is/are hydrogen, a methyl group or an ethyl group, and the other moieties R₃ to R₇ are hydrogen, and R₁ and R₂ respectively mutually independently are an alkyl moiety having from 1 to 4 carbon atoms.

3. Reactive resin according to Claim 1, **characterized in that** the tertiary amine is N-methyl-N-(hydroxyethyl)-p-toluidine, N-methyl-N-(hydroxyethyl)-m-toluidine, N-methyl-N-(hydroxypropyl)-p-toluidine, an N-methyl-N-(hydroxyethyl)xylidine, an N-methyl-N-(hydroxypropyl)xylidine, N-methyl-N-(hydroxyethyl)aniline or N-methyl-N-(hydroxypropyl)aniline.

4. Reactive resin according to any of Claims 1 to 3, **characterized in that** the two components of the reactive resin together have the following ingredients:
from 0.5% by weight to 30% by weight of crosslinking agent,
from 10% by weight to 96.1% by weight of (meth)acrylates and optionally (meth)acrylate-copolymerizable components,
from 0% by weight to 20% by weight of urethane (meth)acrylates,
from 3% by weight to 40% by weight of prepolymers,
from 0.1% by weight to 5% by weight of at least one tertiary amine according to Claim 1,
from 0% by weight to 25% by weight of core-shell particles,
from 0.3% by weight to 5% by weight of at least one initiator, where the initiator(s) and the tertiary amine are present in separate components of the 2-component system, and
optionally other auxiliaries.

5. Reactive resin according to Claim 4, **characterized in that** the two components of the reactive resin together have the following ingredients:
from 2% by weight to 20% by weight of di-, tri- or tetra(meth)acrylates,
from 30% by weight to 80% by weight of (meth)acrylates and optionally (meth)acrylate-copolymerizable components,
from 0% by weight to 20% by weight of urethane (meth)acrylates,
from 15% by weight to 35% by weight of poly(meth)acrylates and/or polyesters,
from 0.1% by weight to 1.0% by weight of at least one tertiary amine according to Claim 1,
from 0% by weight to 20% by weight of core-shell particles,
from 0.3% by weight to 3% by weight of initiator, where the initiator and the tertiary amine are present in separate components of the 2-component system, and
optionally other auxiliaries.

6. Reactive resin according to Claim 4 or 5, **characterized in that** the reactive resin is halogen-free, and the reactive resin has the following ingredients:
from 3% by weight to 15% by weight of dimethacrylates,
from 30% by weight to 40% by weight of (meth)acrylates and optionally (meth)acrylate-copolymerizable components,
from 0% by weight to 20% by weight of urethane (meth)acrylates,
from 15% by weight to 25% by weight of poly(meth)acrylates,
from 0.1% by weight to 5% by weight of tertiary amines according to Claim 2,
from 0% by weight to 15% by weight of core-shell particles comprising polymethacrylates,
from 0.3% by weight to 5% by weight of one or more peroxides and optionally other auxiliaries.

7. Reactive resin according to any of Claims 1 to 6, **characterized in that** this comprises from 0.1% by weight to 0.5% by weight of the tertiary amines according to Claim 1 or 2.

8. Reactive resin according to any of Claims 1 to 7, **characterized in that** the peroxide is dilauroyl peroxide and/or dibenzoyl peroxide.

9. Cold plastic, **characterized in that** the cold plastic has the following components:
from 5% by weight to 60% by weight of the two components of the 2-component reactive resin according to any of Claims 1 to 8,
from 0.15% by weight to 25% by weight of an inorganic pigment, preferably titanium dioxide, from 0% by weight to 5% by weight of stabilizers and/or additives and
from 50% by weight to 60% by weight of mineral and/or polymeric fillers.

10. Use of a reactive resin according to at least one of Claims 1 to 8 for the production of trafficway markings.

11. Use of a reactive resin according to at least one of Claims 1 to 8 in floorcoverings, for the production of castings, for the sealing or coating of bridges or of roofs, for the production of sheets, for the production of protective coatings in particular for metal surfaces, in drainage-system resins or for use in the orthopaedic sector.

12. Use of a cold plastic according to Claim 9 for the production of durable trafficway markings.

13. Use of a cold plastic according to Claim 9 for the production of durable trafficway markings, **characterized in that** before, during or directly after the application of the cold plastic on the trafficway surface glass beads are added.

## Revendications

1. Résine réactive 2-K à base de (méth)acrylate, qui contient dans un ou deux composants au moins 0,5 % en poids d'agents de réticulation, au moins 10 % en poids de monomères de (méth)acrylate, au moins 3 % en poids de prépolymères et éventuellement d'autres additifs, **caractérisée en ce qu'**un composant contient au moins un initiateur et **en ce que** l'autre composant contient au moins une amine tertiaire contenant un groupe aromatique et deux groupes alkyle différents l'un de l'autre, qui peuvent éventuellement comprendre un groupe OH, en tant qu'accélérateur.

2. Résine réactive 2-K selon la revendication 1, **caractérisée en ce que** l'amine tertiaire présente la structure suivants : 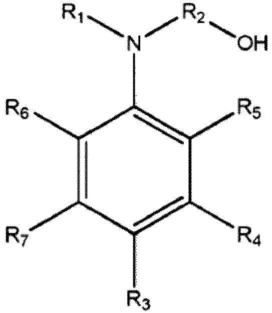 dans laquelle un à trois des radicaux R₃, R₄, R₅, R₆ ou R₇ représentent l'hydrogène, un groupe méthyle ou un groupe éthyle, les autres radicaux R₃ à R₇ représentent l'hydrogène, et R₁ et R₂ représentent chacun indépendamment l'un de l'autre un radical alkyle de 1 à 4 atomes de carbone.

3. Résine réactive selon la revendication 1, **caractérisée en ce que** l'amine tertiaire est la N-méthyl-N-(hydroxyéthyl)-p-toluidine, la N-méthyl-N-(hydroxyéthyl)-m-toluidine, la N-méthyl-N-(hydroxypropyl)-p-toluidine, une N-méthyl-N-(hydroxyéthyl)-xylidine, une N-méthyl-N-(hydroxypropyl)-xylidine, la N-méthyl-N-(hydroxyéthyl)-aniline ou la N-méthyl-N-(hydroxypropyl)-aniline.

4. Résine réactive selon l'une quelconque des revendications 1 à 3, **caractérisée en ce que** les deux composants de la résine réactive comprennent ensemble les constituants suivantes :
0,5 % en poids à 30 % en poids d'agents de réticulation,
10 % en poids à 96,1 % en poids de (méth)acrylates et éventuellement de composants copolymérisables avec les (méth)acrylates,
0 % en poids à 20 % en poids de (méth)acrylates d'uréthane,
3 % en poids à 40 % en poids de prépolymères,
0,1 % en poids à 5 % en poids d'au moins une amine tertiaire selon la revendication 1,
0 % en poids à 25 % en poids de particules noyau-enveloppe,
0,3 % en poids à 5 % en poids d'au moins un initiateur, le ou les initiateurs et l'amine tertiaire étant présents dans des composants séparés du système 2-K, et éventuellement des adjuvants supplémentaires.

5. Résine réactive selon la revendication 4, **caractérisée en ce que** les deux composants de la résine réactive comprennent ensemble les constituants suivantes :
2 % en poids à 20 % en poids de di-, tri- ou tétra-(méth)acrylates,
30 % en poids à 80 % en poids de (méth)acrylates et éventuellement de composants copolymérisables avec les (méth)acrylates,
0 % en poids à 20 % en poids de (méth)acrylates d'uréthane,
15 % en poids à 35 % en poids de poly(méth)acrylates et/ou de polyesters,
0,1 % en poids à 1,0 % en poids d'au moins une amine tertiaire selon la revendication 1,
0 % en poids à 20 % en poids de particules noyau-enveloppe,
0,3 % en poids à 3 % en poids d'un initiateur,
l'initiateurs et l'amine tertiaire étant présents dans des composants séparés du système 2-K, et
éventuellement des adjuvants supplémentaires.

6. Résine réactive selon la revendication 4 ou 5, **caractérisée en ce que** la résine réactive est sans halogène et **en ce que** la résine réactive comprend les constituants suivantes :
3 % en poids à 15 % en poids de diméthacrylates,
30 % en poids à 40 % en poids de (méth)acrylates et éventuellement de composants copolymérisables avec les (méth)acrylates,
0 % en poids à 20 % en poids de (méth)acrylates d'uréthane,
15 % en poids à 25 % en poids de poly(méth)acrylates,
0,1 % en poids à 5 % en poids d'amines tertiaires selon la revendication 2,
0 % en poids à 15 % en poids de particules noyau-enveloppe contenant des polyméthacrylates,
0,3 % en poids à 5 % en poids d'un ou de plusieurs peroxydes,
et éventuellement des adjuvants supplémentaires.

7. Résine réactive selon les revendications 1 à 6, **caractérisée en ce que** celle-ci contient 0,1 % en poids à 0,5 % en poids des amines tertiaires selon la revendication 1 ou 2.

8. Résine réactive selon l'une quelconque des revendications 1 à 7, **caractérisée en ce que** le peroxyde est le peroxyde de dilauroyle et/ou le peroxyde de dibenzoyle.

9. Plastique froid, **caractérisé en ce que** le plastique froid comprend les composants suivantes :
5 % en poids à 60 % en poids des deux composants de la résine réactive 2-K selon l'une quelconque des revendications 1 à 8, 0,15 % en poids à 25 % en poids d'un pigment inorganique, de préférence le dioxyde de titane, 0 % en poids à 5 % en poids de stabilisateurs et/ou d'additifs, et 50 % en poids à 60 % en poids de charges minérales et/ou polymères.

10. Utilisation d'une résine réactive selon au moins l'une quelconque des revendications 1 à 8 pour la fabrication de signalisations routières.

11. Utilisation d'une résine réactive selon au moins l'une quelconque des revendications 1 à 8 dans des revêtements de sol, pour la fabrication de pièces moulées, pour l'étanchéification ou le revêtement de ponts ou de toits, pour la fabrication de plaques, pour la fabrication de revêtements de protection, notamment pour surfaces métalliques, dans des résines de canaux ou pour une utilisation dans le domaine de l'orthopédie.

12. Utilisation d'un plastique froid selon la revendication 9 pour la fabrication signalisations routières durables.

13. Utilisation d'un plastique froid selon la revendication 9 pour la fabrication signalisations routières durables, **caractérisée en ce qu'**avant, pendant ou directement après l'application du plastiques froid sur la surface routière, des billes de verre sont ajoutées.
